# EUROPÄISCHE PATENTANMELDUNG

(11) **EP 0 789 186 A2**
(43) Veröffentlichungstag der Anmeldung: **13.08.1997**
(21) Anmeldenummer: 96115510.8
(22) Anmeldetag: 27.09.1996
(51) Int. Cl.: F23C 3/00, F23M 5/00, F23C 9/00

(54) **Mantelstrahlheizrohr**

(30) Priorität: 02.10.1995 DE 19536706
(71) Anmelder: LBE BEHEIZUNGSEINRICHTUNGEN GMBH, D-42389 Wuppertal (DE); IABG Industrieanlagen-Betriebsgesellschaft mbH, 85521 Ottobrunn (DE)
(72) Erfinder: Dittmann, Hans Joachim, 58332 Schwelm (DE); Papenburg, Ulrich, 85658 Egmating (DE)
(74) Vertreter: Harlacher, Mechthild

(57) **Zusammenfassung**

Das Mantelstrahlheizrohr weist einen Rohrkörper (7) aus kohlenstoffaserverstärktem Siliziumcarbid (C/SiC) auf, dessen zentraler Hohlraum das eigentliche Flammrohr bildet. In der Wandung des Rohrkörpers (7) sind axiale Durchgangskanäle (9) vorgesehen, durch die das Abgas nach seiner Umlenkung zurückströmt. In den zentralen Hohlraum (8) des Rohrkörpers (7) ragt eine Brennstofflanze (6) hinein. Dieser Bereich des Rohrkörpers (7) arbeitet als Rekuperator. Auf der Höhe des Auslaßendes der Brennstofflanze (6) stellen Öffnungen (12) eine Verbindung zwischen dem Hohlraum (8) und den Durchgangskanälen (9) her, um eine Abgasrezirkulierung zu ermöglichen.

## Beschreibung

Die Erfindung betrifft ein Mantelstrahlheizrohr mit einem Mantelrohr und einem in diesem angeordneten Flammrohr, wobei beide Rohre aus keramischem Material bestehen.

Bei einer bekannten Ausführungsform eines Mantelstrahlheizrohres bestehen Mantelrohr und Flammrohr jeweils aus einer hoch hitzebeständigen Stahllegierung. Bei höheren Betriebstemperaturen besteht hierbei die Gefahr der Zunderbildung und der rapiden Festigkeitsabnahme. Bei horizontalem Einbau ist damit ein Durchhängen des Mantelstrahlheizrohres unvermeidbar. Ein periodisches Drehen gehört daher zu den regelmäßigen und häufig erforderlichen Wartungsarbeiten.

Letzteres gilt auch für eine modifizierte Ausführungsform, bei der das Mantelrohr aus einer hoch hitzebeständigen Stahllegierung und das stets höher belastete Flammrohr aus keramischen Materialien auf der Basis von Al₂O₃ oder Si/SiC besteht, da auch hier das Mantelrohr der Gefahr des Durchhängens unterliegt.

Ein weiterer Entwicklungsschritt führt zu einer bekannten voll keramischen Ausführungsform von Mantelstrahlheizrohren. Dabei bilden die Mantelrohre und die Flammrohre eigenständige Bauteile. Als Material kommt Si/SiC zum Einsatz. Die Rohre werden im Schlickergußverfahren hergestellt. Dabei besteht ein wesentlicher Nachteil darin, daß die Rohre eine einheitliche Wandstärke aufweisen müssen und somit entsprechenden konstruktiven Einschränkungen unterliegen. Letztere betreffen zum Beispiel die Längendimensionierung und das Anbringen von Befestigungsflanschen. Darüber hinaus ist der eingesetzte Werkstoff sehr spröde, so daß bei mechanischer Belastung Bruchgefahr besteht. Dementsprechend ist insbesondere bei der Montage und auch bei der Demontage der Rohre größte Sorgfalt erforderlich. Bruchgefahr besteht außerdem auch bei Nutzgutkarambolagen, z.B. in Industrieöfen.

Der Erfindung liegt die Aufgabe zugrunde, ein keramisches Mantelstrahlheizrohr mit hoher Temperatur-, Schlag- und Abriebfestigkeit bei einer nahezu unbegrenzten Geometrie- und Formenvielfalt zu schaffen.

Zur Lösung dieser Aufgabe ist das Mantelstrahlheizrohr der eingangs genannten Art erfindungsgemäß dadurch gekennzeichnet, daß das Mantelrohr und das Flammrohr aus kohlenstoffaserverstärktem Siliziumkarbit (CSiC) bestehen und keramisch miteinander verbunden sind.

Mantelrohr und Flammrohr bestehen also aus ein und demselben Werkstoff und bilden eine monolithische Struktur. Wärmedehnungsprobleme können dementsprechend nicht mehr auftreten. Auch kommt es nicht mehr zu einem Durchhängen des Mantelrohres, so daß entsprechende wartungsarbeiten entfallen. Insgesamt erhöht sich die Lebensdauer des Strahlrohres.

Es wurde gefunden, daß CSiC über hervorragende Festigkeitseigenschaften verfügt, die einen Einsatz auch unter schweren Bedingungen ermöglichen. Hinzu kommen Schlag- und verschleißfestigkeit, Oxidationsbeständigkeit sowie, neben der Temperaturbeständigkeit, eine hohe Temperaturwechselbeständigkeit. Das Material besitzt eine sehr geringe Dichte, so daß es sich leicht handhaben läßt und besonders für Mantelstrahlheizrohre großer Abmessungen geeignet ist. Dabei ist es absolut gasdicht.

Besonders hervorzuheben sind die große Geometrie- und Formenvielfalt sowie die hervorragende Temperaturfestigkeit und Wärmeleitfähigkeit, die entsprechend hohe Heizleistungen ermöglicht.

Man unterscheidet CSiC mit kontinuierlicher Faserverstärkung sowie kurzfaserverstärktes C/SiC. Das erstgenannte Material, das gewickelt werden kann, zeichnet sich durch besonders hohe Festigkeit und besonders niedrige Dichte aus. Zur Erhöhung der Oxidationsbeständigkeit kann mit einer Oberflächenversiegelung gearbeitet werden. Letztere ist bei kurzfaserverstärktem CSiC überflüssig, da das Material besonders oxidations- und korrosionsbeständig ist. Auch verfügt es über eine extrem gute Wärmeleitfähigkeit und zeichnet sich durch besonders hohe Thermoschockfestigkeit aus. Es eignet sich vor allen Dingen für eine mechanische Bearbeitung im Grünzustand.

Vorteilhafterweise ist das Flammrohr unter Zwischenschaltung von Abstandshaltern aus CSiC mit dem Mantelrohr zusammensiliziert, um die gewünschte monolithische Struktur zu ergeben. Diese Konstruktion eignet sich insbesondere für CSiC mit kontinuierlicher Faserverstärkung, wobei die Rohre vor dem Zusammensilizieren gewickelt werden.

Dabei beträgt die Wandstärke des Mantelrohres und/oder des Flammrohres vorzugsweise lediglich ca. 2 mm. Ein derartiges Rohr kann ohne weiteres mit einem Flansch von 15 mm Breite verbunden sein.

In Weiterbildung der Erfindung ist in das Mantelrohr ein Rekuperator, vorteilhafterweise aus CSiC, eingesteckt und vorzugsweise unter Zwischenschaltung von Abstandshaltern aus C/SiC mit dem Mantelrohr zusammensiliziert. Bei dem Rekuperatur kann es sich um ein einfaches Rohrstück handeln, das eine Luftführung bildet und auf seiner Außenseite von Abgas umströmt wird.

In wesentlicher Weiterbildung der Erfindung ist ein Rohrkörper vorgesehen, in dessen Wandung axiale Durchgangskanäle ausgebildet sind, wobei der Rohrkörper an seinem einen Ende mit seinem zentralen Hohlraum an einen Brenner und mit seinen Durchgangskanälen an einen Abgasauslaß angeschlossen ist, während er an seinem anderen Ende eine den Hohlraum mit den Durchgangskanälen verbindende Kammer bildet. Die monolithische Struktur des Mantelstrahlheizrohres wird in diesem Falle von dem Rohrkörper gebildet, wobei die heißen Abgase erst den zentralen Hohlraum des Rohrkörpers und sodann in Gegenrichtung die in der Wandung ausgebildeten axialen Durchgangskanäle durchströmen. Für diese Konstruktion eignet sich insbesondere kurzfaserverstärktes CSiC, und zwar wegen seiner besonders hohen Wärmeleitfähigkeit. Die besonders gute Bearbeitbarkeit dieses Materials läßt außerdem die Herstellung durch mechanische Bearbeitung eines C/SiC-Rohlings zu.

Die den Hohlraum mit den Durchgangskanälen verbindende Kammer wird vorzugsweise von einer ansilizierten Kappe gebildet.

Vorteilhafterweise haben die Durchgangskanäle einen runden, rechteckigen oder schlitzförmigen Querschnitt.

In Weiterbildung der Erfindung wird vorgeschlagen, daß der Brenner eine Brennstofflanze aufweist, die sich mit ihrem Auslaßende ein Stück in den zentralen Hohlraum des Rohrkörpers hineinerstreckt. Bei dieser Kontruktion bildet derjenige Abschnitt des Rohrkörpers, durch den sich die Brennstofflanze hindurcherstreckt, einen Rekuperator, wobei dieser Abschnitt des Hohlraumes als Luftführung arbeitet, die in Wärmeaustausch mit den Abgas-Durchgangskanälen steht.

Dabei sind etwa auf der Höhe des Auslasses der Brennstofflanze vorteilhafterweise radiale Öffnungen zum Verbinden der axialen Durchgangskanäle mit dem Hohlraum des Rohrkörpers vorgesehen. Die radialen Öffnungen ermöglichen eine Rezirkulation des Abgases.

Die Erfindung wird im folgenden anhand bevorzugter Ausführungsbeispiele im Zusammenhang mit der beiliegenden Zeichnung näher erläutert. Die Zeichnung zeigt in:
Fig. 1 einen axialen Schnitt durch eine erste Ausführungsform;
Fig. 2 einen axialen Schnitt durch eine zweite Ausführungsform;
Fig. 3 einen Schnitt entlang der Linie III-III in Fig. 2.

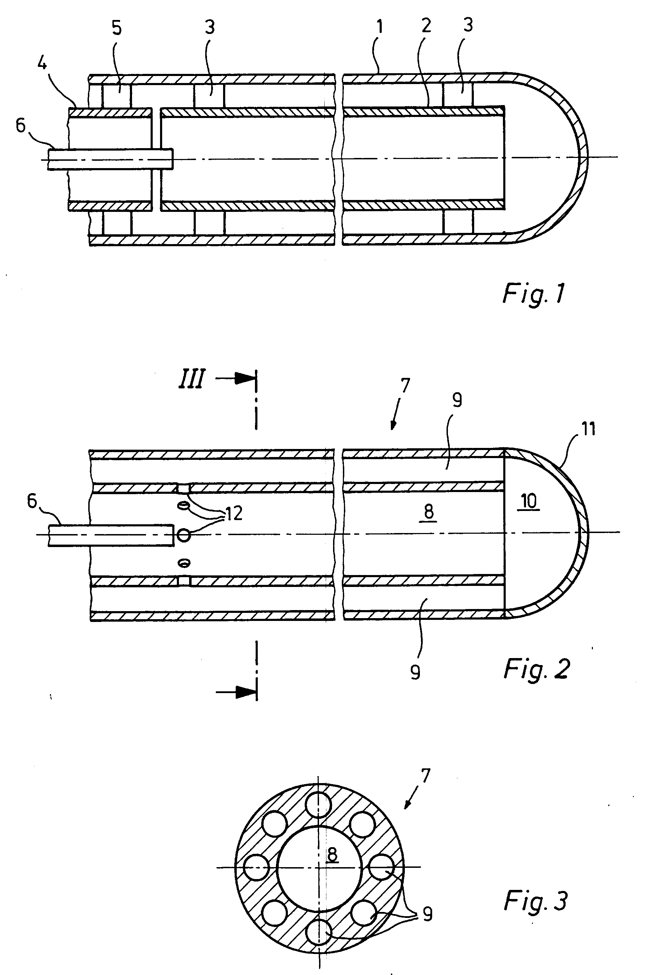

Das Mantelstahlheizrohr nach Fig. 1 weist ein Mantelrohr 1 auf, in welchem ein Flammrohr 2 angeordnet ist. Beide Rohre bestehen aus C/SiC mit kontinuierlicher Kohlefaserverstärkung und sind durch Wickeln hergestellt. Zur Ausbildung einer monolithischen Struktur sind sie unter Zwischenschaltung von Abstandshaltern 3 zusammensiliziert. Letztere bestehen ebenfalls aus C/SiC.

Linksseitig ist in das Mantelrohr 1 ein Rekuperator 4 eingesteckt und unter Zwischenschaltung weiterer Abstandshalter 5 mit dem Mantelrohr 1 zusammensiliziert. Der Rekuperatur 4 und die weiteren Abstandshalter 5 bestehen ebenfalls aus C/SiC.

Zwischen dem Flammrohr 2 und dem Rekuperator 4 bildet sich etwa auf der Höhe des Auslaßendes einer Brennstofflanze 6, im vorliegenden Fall einer Gaslanze, ein Ringspalt, der eine Rezirkulation des Abgases zuläßt.

Das Mantelrohr 1 und das Flammrohr 2 weisen trotz relativ geringer Wandstärke von lediglich 2 mm hervorragende Festigkeitseigenschaften auf.

Bei der Ausführungsform nach den Fig. 2 und 3 bildet ein Rohrkörper 7 aus kurzfaserverstärktem C/SiC gleichzeitig das Mantelrohr und das Flammrohr des Mantelstrahlheizrohres. Der Rohrkörper 7 weist einen zentralen Hohlraum 8 auf, in den die Gaslanze 6 ein gutes Stück hineinragt. Rings um den Hohlraum 8 ist eine Mehrzahl von Durchgangskanälen 9 angeordnet. Durch diese Durchgangskanäle 9 hindurch wird das Abgas zu einem nicht dargestellten Abgasauslaß zurückgeführt. Eine Kammer 10, die von einer ansilizierten Kappe 11 aus C/SiC gebildet wird, verbindet den Hohlraum 8 mit den Durchgangskanälen 9, und zwar an dem vom Brenner abgewandten Ende des Mantelstrahlheizrohres.

Derjenige Bereich des Mantelstrahlheizrohres, in welchem die Brennstofflanze 6 in den zentralen Hohlraum 8 des Rohrkörpers 7 hineinragt, wirkt als Rekuperator. Hier bildet der Hohlraum 8 eine Luftführung.

Etwa auf der Höhe des Auslaßendes der Brennstofflanze 6 sind radiale Öffnungen 12 vorgesehen, die die Durchgangskanäle 9 mit dem Hohlraum 8 verbinden und eine Rezirkulierung des Abgases zulassen.

Der Rohrkörper 7 nach den Fig. 2 und 3 ist durch mechanische Bearbeitung eines C/SiC-Rohlings hergestellt.

Im Rahmen der Erfindung sind durchaus Abwandlungsmöglichkeiten gegeben. So kann der Rohrkörper 7 beispielsweise stranggepreßt werden. Ferner besteht die Möglichkeit, die mechanische Bearbeitung des Rohlings bei der Herstellung des Rohrkörpers 7 so zu führen, daß nicht nur der Hohlraum 8 und die Durchgangskanäle 9, sondern auch die Kammer 10 in den Rohling eingearbeitet werden. Ferner besteht die Möglichkeit, das linksseitige Ende des Rohrkörpers 7 zu entkernen und als Mantelrohr weiterzuführen, in welches ein Rekuperator entsprechend Fig. 1 eingesteckt und ggf. einsiliziert wird. Der Rekuperator kann im übrigen aus einer anderen Keramit oder auch aus Stahl bestehen.

## Patentansprüche

1. Mantelstrahlheizrohr mit einem Mantelrohr (1;7) und einem in diesem angeordneten Flammrohr (2;7), wobei beide Rohre aus keramischem Material bestehen,
**dadurch gekennzeichnet,**
daß das Mantelrohr (1;7) und das Flammrohr (2;7) aus kohlenstoffaserverstärktem Siliziumcarbit (CSiC) bestehen und keramisch miteinander verbunden sind.

2. Mantelstrahlheizrohr nach Anspruch 1, dadurch gekennzeichnet, daß das Flammrohr (2) unter Zwischenschaltung von Abstandshaltern (3) aus CSiC mit dem Mantelrohr (1) zusammensiliziert ist.

3. Mantelstrahlheizrohr nach Anspruch 2, dadurch gekennzeichnet, daß die Wandstärke des Mantelrohres (1) und/oder des Flammrohres (2) ca. 2 mm beträgt.

4. Mantelstrahlheizrohr nach Anspruch 2 oder 3, dadurch gekennzeichnet, daß in das Mantelrohr (1) ein Rekuperator (4) eingesteckt ist, der vorzugsweise aus CSiC besteht.

5. Mantelstrahlheizrohr nach Anspruch 4, dadurch gekennzeichnet, daß der Rekuperator (4) unter Zwischenschaltung von Abstandshaltern (5) aus C/SiC mit dem Mantelrohr (1) zusammensiliziert ist.

6. Mantelstrahlheizrohr nach Anspruch 1, gekennzeichnet durch einen Rohrkörper (7), in dessen Wandung axiale Durchgangskanäle (9) ausgebildet sind, wobei der Rohrkörper (7) an seinem einen Ende mit seinem zentralen Hohlraum (8) an einen Brenner und mit seinen Durchgangskanälen (9) an einen Abgasauslaß angeschlossen ist, während er an seinem anderen Ende eine den Hohlraum (8) mit den Durchgangskanälen (9) verbindende Kammer (10) bildet.

7. Mantelstrahlheizrohr nach Anspruch 6, dadurch gekennzeichnet, daß die den Hohlraum (8) mit den Durchgangskanälen (9) verbindende Kammern (10) von einer ansilizierten Kappe (11) gebildet wird.

8. Mantelstrahlheizrohr nach Anspruch 6 oder 7, dadurch gekennzeichnet, daß der Hohlkörper (7) durch maschinelle Bearbeitung eines C/SiC-Rohlings hergestellt ist.

9. Mantelstrahlheizrohr nach einem der Ansprüche 6 bis 8, dadurch gekennzeichnet, daß die Durchgangskanäle (9) einen runden, rechteckigen oder schlitzförmigen Querschnitt aufweisen.

10. Mantelstrahlheizrohr nach einem der Ansprüche 6 bis 9, dadurch gekennzeichnet, daß der Brenner eine Brennstofflanze (6) aufweist, die sich mit ihrem Auslaßende ein Stück in den zentralen Hohlraum (8) des Rohrkörpers (7) hineinerstreckt.

11. Mantelstrahlheizrohr nach Anspruch 10, dadurch gekennzeichnet, daß etwa auf der Höhe des Auslaßendes der Brennstofflanze (6) radiale Öffnungen (12) zum Verbinden der axialen Durchgangskanäle mit dem Hohlraum (8) des Rohrkörpers (7) vorgesehen sind.
